# EUROPEAN PATENT APPLICATION

(11) **EP 2 998 836 A1**
(43) Date of publication of application: **23.03.2016**
(21) Application number: 14798523.8
(22) Date of filing: 13.05.2014
(51) Int. Cl.: G06F 3/041, G06F 3/044

(54) **CAPACITIVE TOUCH PANEL**

(30) Priority: 16.05.2013 JP 2013104010
(71) Applicant: Dexerials Corporation, Tokyo 141-0032 (JP)
(72) Inventor: ODAGIRI, Hirokazu, Tokyo 141-0032 (JP); IMAMURA, Yoshiaki, Tokyo 141-0032 (JP)
(74) Representative: Müller Hoffmann & Partner
(86) International application number: PCT/JP2014/062700
(87) International publication number: WO 2014/185404

(57) **Abstract**

Provided is a touch panel in which warpage due to a difference in the linear expansion coefficient between resin layers is reduced while achieving reduction in thickness and weight by using a multi-layered resin base material. A capacitive touch panel to which the present invention is applied comprises a transparent resin base material (2); a transparent resin layer (3) formed on the front surface of the transparent resin base material (2); a decorative printed layer (5) formed on an outer edge of the back surface of the transparent resin base material (2); and a warp prevention layer (7) formed so as to extend and cover over the back surface of the transparent resin base material (2) and the decorative printed layer (5).

## Description

### Background of the Invention

### Field of the Invention

The present invention relates to a capacitive touch panel, and particularly, to a top plate constituting the capacitive touch panel. This application claims the benefit of priority to Japanese Patent Application No. 2013-104010, filed on May 16, 2013 in Japan, which is incorporated herein by reference in its entirety.

### Description of Related Art

The spread of smart phones and tablet PCs that can be operated easily by means of touch panels has raised the need for thin, lightweight and low-cost touch panels.

Various detecting methods are available for touch panels, including a resistance film method in which two resistive films are superposed to identify indicated positions, and a surface acoustic wave method in which ultrasonic waves or surface acoustic waves are generated on a panel surface to detect indicated positions. The touch panels used in smart phones and tablet PCs need to support complex operations with an increased degree of freedom, including tapping on a panel with a finger, dragging the finger, moving two fingers on a display so as to widen the span of the fingers to expand an image (pinching out), and moving two fingers so as to narrow the span to perform a pinch-in operation. Accordingly, capacitive touch panels in which an x-y matrix of transparent electrodes is formed to provide for simultaneous detection of a plurality of indicated positions have become a main stream.

Various studies have been made in order to decrease the thickness, weight and cost of a touch panel. Attempts are being made to change a top plate disposed so as to cover a surface of a capacitive sheet, from a top plate made from glass to a top plate made from a resin material, in order to protect the capacitive sheet on which transparent electrodes are formed. Attempts are also being made energetically to reduce the number of capacitive sheets from two to one and thereby achieve decreases in both thickness and cost, by, for example, forming transparent electrodes on both sides of a film.

Patent document 1: Japanese Patent Application Laid-Open No. 2000-207983

### Brief Summary of the Invention

In a case where a top plate made from resin is used in a capacitive touch panel, the top plate is exposed to a high-temperature environment when manufacturing the touch panel and a liquid crystal panel to be mounted with the touch panel. Accordingly, a highly heat-resistant resin material, for example, polycarbonate (PC) resin is generally used for the top plate. The front surface of the touch panel is exposed to an external environment and is, therefore, the surface is liable to scratches. PC resin is low in hardness, and therefore, has the problem of causing the touch panel to be defective in terms of design and visibility, if the surface of the top plate made from PC resin is scratched. Accordingly, it is practiced to make a top plate having a multi-layered surface by using rigid resin high in hardness. For example, a multi-layered transparent resin base material composed of PC resin and acrylic resin (polymethyl methacrylate resin (PMMA)) has been developed using a two-layer extrusion molding technology.

However, PC resin which is a main base material and PMMA resin for surface protection differ in the linear coefficient of expansion. A base material including two layers made from the respective PC and PMMA resins therefore has the problem of causing the top plate as a whole to become warped depending on, for example, a change in environmental temperature at the time of panel manufacturing or after the mounting of a panel on a product.

Patent Literature 1 discloses a technique of bonding sheets made from polyethylene terephthalate (PET) resin to both sides of a PC resin layer, in order to relieve the warpage of a base material due to a difference in the linear expansion coefficient between the top plate resin materials. This technique requires bonding the PET resin sheets to both sides of the main base material with a pressure-sensitive adhesive, and therefore, has the problem of making a manufacturing process cumbersome and complicated and increasing manufacturing costs including the cost of materials, such as the pressure-sensitive adhesive. Hence, a top plate base material for touch panels in which PMMA resin sheets are integrally formed on both sides of the PC resin layer in place of the PET resin sheets as described above is beginning to be commercially available. However, PMMA resin is not necessarily high in heat resistance. In addition, a special extrusion die is required in order to manufacture such a resin base material having a three-layer structure. Thus, the top plate base material still has the problem of degradation in productivity and an increase in manufacturing costs.

Hence, it is an object of the present invention to provide a touch panel in which warpage due to a difference in the linear expansion coefficient between resin layers is reduced while achieving reduction in thickness and weight by using a multi-layered resin base material.

In order to solve the above-described problems, a capacitive touch panel according to one embodiment of the present invention comprises a transparent resin base material; a transparent resin layer composed of a material different from the transparent resin base material and formed on one surface thereof; a decorative printed layer formed on an outer edge of the other surface of the transparent resin base material; and a warp prevention layer formed so as to extend and cover over the other surface of the transparent resin base material and the decorative printed layer.

In the present invention, the warp prevention layer is formed so as to extend and cover over the other surface of the transparent resin base material and the decorative printed layer. Consequently, it is possible to reduce the warpage of the capacitive touch panel.

### Brief Description of the Several Views of the Drawings

Figures 1A and 1B illustrate the structure of a capacitive touch panel according to one embodiment of the present invention. Figure 1A is a plan view of the capacitive touch panel, and Figure 1B is a cross-sectional view taken on the AA' line of Figure 1A.
Figure 2A is a cross-sectional view of a top plate constituting the capacitive touch panel according to one embodiment of the present invention. Figure 2B is a cross-sectional view illustrating a modified example in which a top coating layer is removed from the top plate of Figure 2A.
Figures 3A and 3B illustrate the way tensile stress due to a linear expansion coefficient arises in respective members constituting the top plate when temperature stress is applied to the top plate of the capacitive touch panel. Figure 3A illustrates the case of the top plate of the capacitive touch panel to which the present invention is applied, and Figure 3B illustrates the case of the top plate of a conventional capacitive touch panel.
Figure 4 is a graph plotted with the measured values of the warpage of Examples and a comparative example for the top plate of the capacitive touch panel after thermal stress is applied to the samples.
Figures 5A and 5B are cross-sectional views of structures of top plates of conventional capacitive touch panels. Figure 5A is a cross-sectional view of a two-layer top plate in which a PMMA resin layer is formed on one side of a PC base material, and Figure 5B is a cross-sectional view of a two-type three-layer top plate in which PMMA resin layers are formed on both sides of the PC base material.

### Detailed Description of the Invention

Hereinafter, modes for carrying out the present invention will be described in detail while referring to the accompanying drawings. It should be noted that needless to say, the present invention is not limited to the embodiments to be described hereinafter but may be modified in various other ways within the scope of the present invention as defined by the claims appended hereto. Also note that the dimensions of each constituent part illustrated in the drawings are merely adumbrative. The dimensions of cross-sectional views, among others, are emphasized in the thickness direction of the views in order to clarify structures.

### Configuration Examples of Capacitive Touch Panel

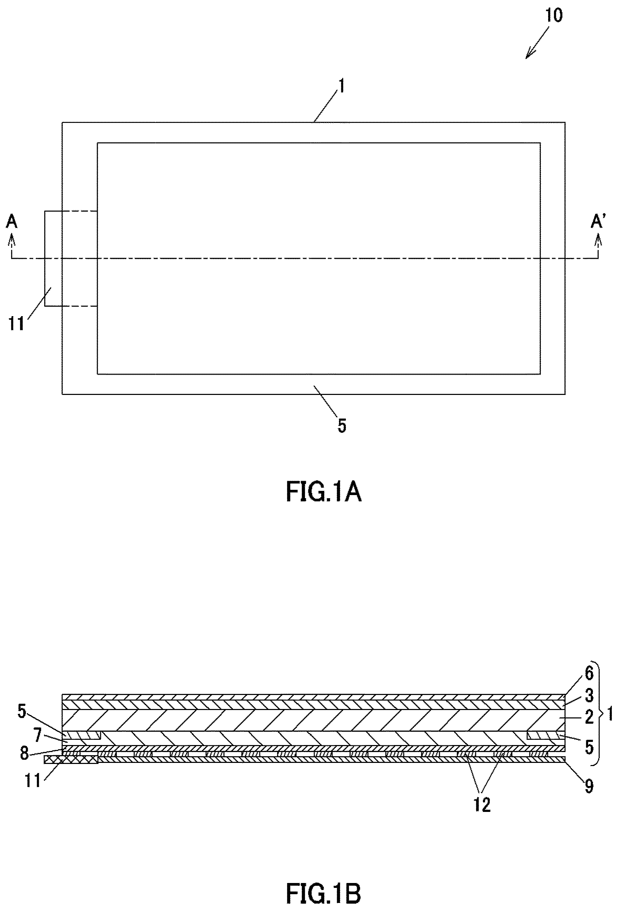

As illustrated in Figures 1A and 1B, a capacitive touch panel 10 to which the present invention is applied comprises a top plate 1 which is an upper structure, and a transparent electrode layer 8 and a jumper wire layer 12 including an insulating layer which are a lower structure disposed on the back surface side of the top plate 1.

As illustrated in Figure 1B, the top plate 1 includes a transparent resin base material 2 containing a resin material high in heat resistance; a transparent resin layer 3 containing a rigid resin material high in hardness and formed on one side, i.e., the front surface of the transparent resin base material 2; a decorative printed layer 5 formed on an outer edge of the other side, i.e., the back surface of the transparent resin base material 2; and a warp prevention layer 7 formed so as to extend and cover over the back surface side of the top plate 1 and the decorative printed layer 5.

The transparent resin base material 2 is preferably formed from PC resin which is a resin material high in heat resistance, and the transparent resin layer 3 is preferably formed from PMMA resin which is a rigid resin material high in hardness. In general, the resistance of the front surface of the touch panel to scratching is evaluated based on pencil hardness (JIS K 5600 Scratch Hardness Test). PC resin as a unitary base material is HB to H in surface hardness and is, therefore, susceptible to scratching. On the other hand, PMMA resin is 3H to 5H in surface hardness and is, therefore, preferred as a material to be used in the front surface of the touch panel. By forming the transparent resin layer 3 composed of PMMA resin or the like on one surface of the transparent resin base material 2 composed of PC resin or the like, i.e., on the front surface side of the capacitive touch panel 10, it is possible to attain a scratch-resistant touch panel. In addition, a top coating layer 6 may be formed on the front surface of the transparent resin layer 3 as a protective layer.

The transparent resin base material 2 including the transparent resin layer 3 formed on the front surface of the base material is formed by performing simultaneous melt-molding using two types of resin materials.

The decorative printed layer 5 is formed for the purpose of covering a region in which electrodes, wiring lines, and the like necessary to functionalize a portion of the touch panel on an outer edge of a liquid crystal display constituting a smart phone, a tablet terminal, or the like are formed, as a picture-frame region, so that the region is not visible from the outside. The decorative printed layer 5 is formed by recoating colored ink in a multi-layered manner by means of silk-screen printing. In order to coat the ink to a predetermined thickness to prevent the electrodes, wiring lines and the like formed in the picture-frame region from being seen through, the ink needs to be coated a plurality of times with a coated layer per coating operation kept thin to form a multi-layered printed layer, since thickly coating the ink with a single coating operation tends to result in an uneven coating thickness. For example, the printed layer is formed with two coating operations in the case of dark-colored ink that allows less light to transmit therethrough. In the case of light-colored (e.g., white) ink that allows more light to transmit therethrough, the ink needs to be recoated four times or so. If a coating thickness per coating operation is approximately 8 µm, a layer of light-colored ink has a thickness of approximately 32 µm.

The warp prevention layer 7 is formed so as to extend over the back surface side of the transparent resin base material 2 and the decorative printed layer 5 and cover the entire surfaces thereof. Preferably, a resin material having a linear expansion coefficient nearly equal to a linear expansion coefficient that a material used in the transparent resin layer 3 formed on the front surface side of the transparent resin base material 2 has is used for the warp prevention layer 7. The material of the warp prevention layer 7 is not limited in particular. As the material, it is possible to use transparent acrylic-based plastic paint, urethane-based plastic paint, or the like used for ultraviolet curable ink and thermosetting ink. More specifically, it is possible to use paint the material of which is urethane (meth)acrylate, epoxy (meth)acrylate, polyester (meth)acrylate, polyester urethane (meth)acrylate, polyether (meth)acrylate, polycarbonate (meth)acrylate, polycarbonate urethane (meth)acrylate, or the like. More preferably, a haze which is a ratio of diffused and transmitted light to the total transmitted light does not exceed 1%, in order to avoid affecting the optical characteristics of the touch panel. When a level difference arising between the decorative printed layer 5 and the transparent resin base material 2 is almost eliminated and the transparent electrode layer 8 is connected, it is also possible to prevent wiring disconnection due to this level difference using, for example, transparent acrylic or urethane-based plastic paint low in viscosity, so as to coat the decorative printed layer 5 and the transparent resin base material 2 with the paint. As described above, the decorative printed layer 5 has a thickness of approximately 32 µm when decorative printing is performed using light-colored ink. Accordingly, the warp prevention layer 7 may be formed by coating the acrylic-based paint on the back surface side of the transparent resin base material 2 and the decorative printed layer 5, so that the warp prevention layer 7 has a thickness of, for example, approximately 35 µm. The acrylic-based paint for forming the warp prevention layer 7 may be directly coated by means of silk-screen printing or using a die coater. Since a well-known coating technique can be used in this way to form the warp prevention layer 7, the same equipment as used in the step of printing the decorative printed layer 5 can be used without having to introduce any special equipment. Thus, it is possible to reduce manufacturing costs. Note that the abovementioned level difference between the decorative printed layer 5 and the transparent resin base material 2 may be only of such a nature as to ensure the connection reliability of the wiring lines of the transparent electrode layer 8, and therefore, need not be completely eliminated. For example, the warp prevention layer 7 may have a thickness of approximately 30 µm for a 32 µm-thick decorative printed layer 5. In addition, the central portion of the warp prevention layer 7 after formation may be, for example, smaller in thickness than the outer edge thereof. That is, the warp prevention layer 7 may not be uniform in thickness over the entire range the layer.

The transparent electrode layer 8 formed in the lower portion of the warp prevention layer 7 is a layer in which transparent electrodes are formed on a transparent film, and is preferably an Ag nanowire film or an ITO film. In the case of a capacitive touch panel, two transparent electrode films in which x-axis direction electrodes and y-axis direction electrodes are formed respectively are generally used to identify the x-y coordinates of a touch position. Alternatively, the transparent electrode layer 8 can be formed into a single-layered transparent electrode layer 8 by forming the transparent electrode layer 8 that uses Ag nanowires and jumper wires used to identify the x-y coordinates of transparent electrodes in a multi-layered manner. By making the transparent electrode layer 8 single-layered, it is possible to reduce the thickness and weight of the capacitive touch panel 10, as well as the number of manufacturing process steps. Thus, it is possible to reduce manufacturing costs. In addition, the thickness per film of commonly-used two ITO films can be decreased by the use of the Ag nanowire film. Thus, use of the Ag nanowire film can contribute to further reducing the thickness and weight of the capacitive touch panel 10. Note that needless to say, the capacitive touch panel 10 to which the present invention is applied can also be adopted in commonly-known structures that use two transparent electrode films.

A protective layer 9 is formed on the back surface side of the jumper wire layer 12 in order to protect the jumper wire layer 12 provided with an insulating layer, and a flexible printed substrate 11 for connection to external circuits is connected to the jumper wire layer 12. A well-known material may be used for the protective layer 9. For example, the protective layer 9 is formed by coating a thermosetting acrylic-based resin.

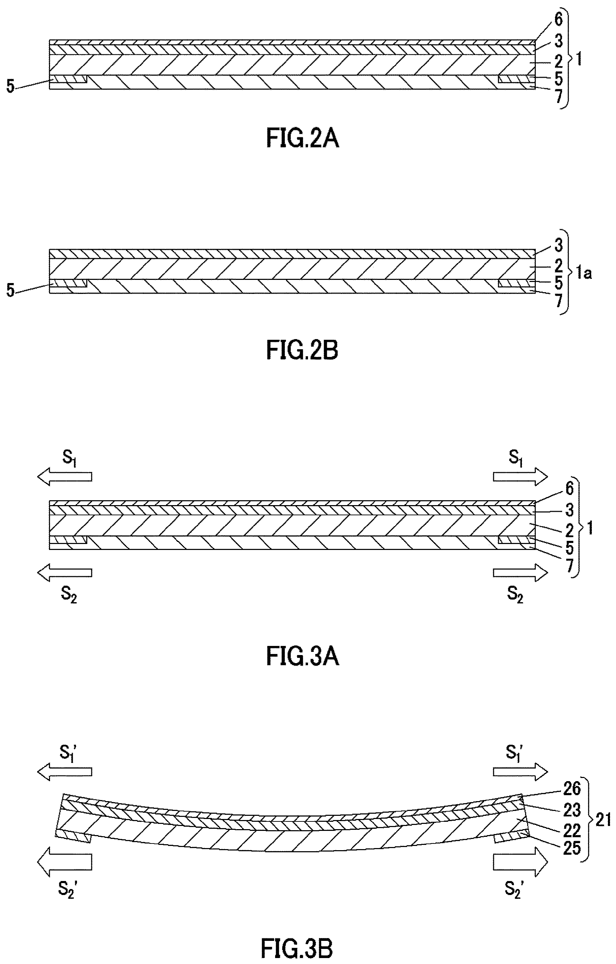

Figure 2A illustrates the top plate 1 used in the capacitive touch panel 10 to which the present invention is applied. As described above, the top plate 1 includes the transparent resin base material 2; the transparent resin layer 3 formed on the front surface of the transparent resin base material 2; the top coating layer 6 formed on the front surface of the transparent resin layer 3; the decorative printed layer 5 formed on an outer edge of the back surface of the transparent resin base material 2; and the warp prevention layer 7 formed so as to extend over the back surface of the top plate 1 and the decorative printed layer 5.

As illustrated in the top plate 1a of Figure 2B, the top coating layer 6 formed on the front surface of the transparent resin layer 3 may be excluded.

### Operating Principles

The structure of a conventional top plate used in a touch panel will be described in order to describe the operating principles of the capacitive touch panel 10 to which the present invention is applied.

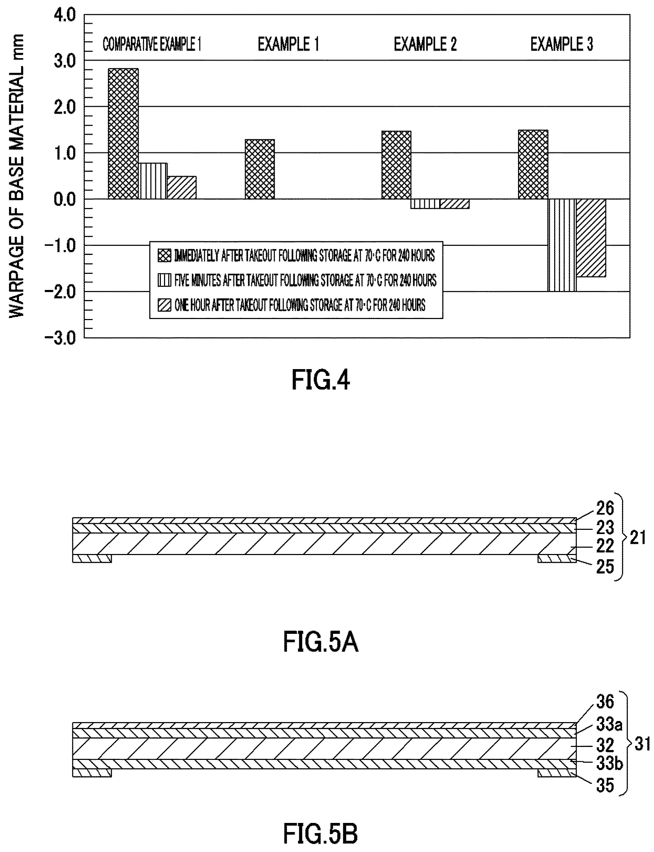

Figure 5A is a cross-sectional view illustrating one example of the structure of a conventional top plate 21. The conventional top plate 21 includes a transparent resin base material 22 composed of PC resin or the like; a transparent resin layer 23 composed of PMMA resin or the like and formed on the front surface of the transparent resin base material 22; a top coating layer 26 formed on the front surface of the transparent resin layer 23; and a decorative printed layer 25 formed on an outer edge of the back surface of the transparent resin base material 22.

Here, note that the linear expansion coefficient of PC resin is approximately 6 to 7 x 10⁻⁵/°C when using PC resin for the transparent resin base material 22. Also note that the linear expansion coefficient of PMMA resin is approximately 5 to 9 × 10⁻⁵/°C when using PMMA resin for the transparent resin layer 23. Accordingly, the linear expansion coefficients of the transparent resin base material 22 and the transparent resin layer 23 generally formed into a stacked state are not equal to each other. In the top plate 21 in which materials different in linear expansion coefficient are layered, the material of each layer expands under a high-temperature environment, thus differentiating tensile stress that each layer receives.

In a top plate 31 disclosed in Patent Literature 1, first and second transparent resin layers 33a and 33b are respectively formed on the two sides of a transparent resin base material 32 composed of the same material, a top coating layer 36 is formed on the front surface of the front surface-side first transparent resin layer 33a, and a decorative printed layer 35 is formed on an outer edge of the back surface side of the back surface-side second transparent resin layer 33b, as illustrated in Figure 5B. Since the first and second transparent resin layers 33a and 33b are made from the same material, the linear expansion coefficients of the front surface and back surface sides of the top plate 31 can be made to conform to each other. Thus, it is possible to make tensile stress on both sides balanced. If PC resin is used as the material of the transparent resin base material 32 and PMMA resin is used as the material of the first and second transparent resin layers 33a and 33b in such a configuration as described above, however, any transparent electrode layer cannot be connected to the back surface-side second transparent resin layer 33b composed of PMMA resin since PMMA resin is heat-labile. In addition, the structure of a T-die becomes complicated and may be a factor for cost increases in a case where a three-layer top plate material is melt-molded. Note that if a resin layer corresponding to the warp prevention layer is further added to the second transparent resin layer 33b constituting the top plate 31 having such a structure as illustrated in Figure 5B, in order to eliminate the level difference between the transparent resin layer 33b and the decorative printed layer 35, warpage occurs since the amounts of tensile stress applied to both sides of the abovementioned top plate 31 become unbalanced. Accordingly, it is not appropriate to add the layer corresponding to the warp prevention layer to such a top plate 31 as illustrated in Figure 5B.

Figures 3A and 3B conceptually show, by comparison, the respective magnitudes of tensile stresses, due to the linear expansion coefficient difference, applied to the front surface and back surface sides of the top plate 1 used in the capacitive touch panel 10 to which the present invention is applied and applied to the front surface and back surface sides of the conventional top plate 21.

In the top plate 1 used in the capacitive touch panel 10 to which the present invention is applied, it is possible to make tensile stresses S1 and S2 applied to the front surface and back surface sides nearly equal to each other, as illustrated in Figure 3A, by making the linear expansion coefficients of the transparent resin layer 3 used for the front surface side of the top plate 1 and the warp prevention layer 7 formed on the back surface side of the top plate 1 nearly equal to each other. The material of the transparent resin layer 3 is, for example, PMMA resin (linear expansion coefficient: approximately 5 to 9 × 10⁻⁵/°C) as described above, and the material of the warp prevention layer 7 is acrylic-based plastic paint (linear expansion coefficient: approximately 5 to 8 × 10⁻⁵/°C). Accordingly, the values of linear expansion coefficients can be made to almost conform to each other.

On the other hand, the linear expansion coefficient of the transparent resin layer 23 used for the front surface side of the transparent resin base material 22 and the linear expansion coefficient of the transparent resin base material 22 differ in the conventional top plate 21, as illustrated in Figure 3B. Accordingly, if the linear expansion coefficient S2' of the transparent resin base material 22 is larger than the linear expansion coefficient S1' of the transparent resin layer 23, the top plate 21 warps so as to be convex downward. If the magnitude relationship between the linear expansion coefficients is reversed (S1' > S2'), the top plate 21 warps so as to be convex upward.

Measurements and comparisons were made of the way warpage occurred in top plates used in a capacitive touch panel to which the present invention was applied and in a conventional top plate under a high-temperature environment.

Top plate samples fabricated as described below were stored for 240 hours using a hot-air thermostatic oven set to 70°C. Thereafter, the top plate samples were taken out and kept at normal temperature for predetermined periods of time, and then warpage was measured at both ends of each top plate sample. The predetermined periods of time refer to points of time immediately, five minutes, and one hour after each sample was taken out of the oven.

### Examples

As the top plates used to measure warpage, top plates composed of a PC resin + PMMA resin (MRS58W, 297 mm × 210 mm × 0.8 mm in size, made by Mitsubishi Gas Chemical Co., Inc.) material were used. The thickness of the PC resin layer was 0.7 mm, whereas the thickness of the PMMA resin layer was 0.1 mm.

After the corona treatment of the back surfaces (sides on which the PMMA resin layers were not formed) of the abovementioned top plates, acrylic-based plastic paint (RL-9262 made by Sanyu Rec Co., Ltd.) was coated by silk-screen printing (mesh #300) as warp prevention layers. This acrylic-based plastic paint was ultraviolet-curable transparent resin paint, and was ultraviolet-cured using a high-pressure mercury lamp after a coating step. The thicknesses of the warp prevention layers of the top plate samples thus fabricated were 0.012 mm (Example 1), 0.055 mm (Example 2), and 0.094 mm (Example 3).

### Comparative Example

There was fabricated a top plate sample which was the same in configuration as the Examples but in which acrylic-based plastic paint was not coated on the PC resin + PMMA resin material.

### Measurement Results

Table 1 and Figure 4 show the results of measurement.

**Table 1**

| | Thickness of warp prevention layer [mm] | Initial thickness [mm] | After takeout following storage 70°C for 240 hours [mm] | | |
|---|---|---|---|---|---|
| | | | Immediately | Five minutes later | One hour later |
| Example 1 | 0.012 | 0 | 1.3 | 0.0 | 0.0 |
| Example 2 | 0.055 | 0 | 1.5 | -0.2 | -0.2 |
| Example 3 | 0.094 | 0 | 1.5 | -2.0 | -1.7 |
| Comparative example | 0 | 0 | 2.8 | 0.8 | 0.5 |

Comparison of the top plate samples immediately after the samples were taken out showed that the warpage of Examples 1 to 3 in which warp prevention layers were formed by coating acrylic-based plastic paint was approximately half the warpage of the comparative example in which any warp prevention layers were not formed.

Warpage was almost corrected in Examples 1 and 2 in five minutes and one hour after takeout, whereas Example 3 warped toward a side opposite to the side toward which the sample warped immediately after takeout. On the other hand, observation of the comparative example showed that warpage remained even if five minutes and one hour elapsed after takeout.

In Example 1 in particular, warpage is almost corrected as time lapses after takeout. The amount of warpage is also as extremely small as 0.2 mm in Example 2. The top plates, even at the level of Example 2, are considered to be sufficiently durable as far as middle and small-sized panels of a 5-inch class for smart phones are concerned, since the top plates are intended for use in 14.1-inch liquid crystal panels, and therefore, relatively large in size.

### Glossary of Drawing References

1, 1a, 21, 31...top plate, 2,22, 32...transparent resin base material, 3,23...transparent resin layer, 33a...first transparent resin layer, 33b...second transparent resin layer, 5,25,35...decorative printed layer, 6, 26, 36...top coating layer, 7...wrap prevention layer, 8...transparent electrode layer, 9...protective layer, 10...capacitive touch panel, 11...flexible printed substrate, 12...jumper wire layer

## Claims

1. A capacitive touch panel comprising:
a transparent resin base material;
a transparent resin layer composed of a material different from the transparent resin base material and formed on one surface of the transparent resin base material;
a decorative printed layer formed on an outer edge of the other surface of the transparent resin base material; and
a warp prevention layer formed so as to extend and cover over the other surface of the transparent resin base material and the decorative printed layer.

2. The capacitive touch panel according to claim 1, wherein a linear expansion coefficient of the transparent resin base material differs from a linear expansion coefficient of the transparent resin layer.

3. The capacitive touch panel according to claim 2, wherein the linear expansion coefficient of the warp prevention layer is nearly equal to the linear expansion coefficient of the transparent resin layer.

4. The capacitive touch panel according to any one of claims 1 to 3, wherein the warp prevention layer is formed from an acrylic-based resin and the thickness of the warp prevention layer is 3 µm to 55 µm.

5. The capacitive touch panel according to claim 4, wherein the thickness of the warp prevention layer is 5 µm to 35 µm.
